# EUROPÄISCHE PATENTSCHRIFT

(11) **EP 1 825 123 B1**
(45) Veröffentlichungstag und Bekanntmachung des Hinweises auf die Patenterteilung: **04.06.2008**
(21) Anmeldenummer: 05797114.5
(22) Anmeldetag: 20.10.2005
(51) Int. Cl.: F02D 41/20, F02D 41/22, H01L 41/04, G01R 19/00

(54) **ELEKTRISCHE SCHALTUNG ZUR ANSTEUERUNG EINES PIEZOELEKTRISCHEN ELEMENTS INSBESONDERE EINER KRAFTSTOFFEINSPRITZANLAGE EINES KRAFTFAHRZEUGS**
ELECTRICAL CIRCUIT FOR CONTROLLING A PIEZOELECTRIC ELEMENT, PARTICULARLY OF A FUEL INJECTION SYSTEM OF A MOTOR VEHICLE
CIRCUIT ELECTRIQUE POUR REGULER UN ELEMENT PIEZO-ELECTRIQUE, NOTAMMENT UN SYSTEME D'INJECTION DE CARBURANT D'AUTOMOBILE

(30) Priorität: 06.12.2004 DE 102004058672
(43) Veröffentlichungstag der Anmeldung: 29.08.2007
(73) Patentinhaber: ROBERT BOSCH GMBH, 70442 Stuttgart (DE)
(72) Erfinder: GRAF, Marco, 71254 Ditzingen (DE); REINEKE, Joerg, 71254 Ditzingen (DE); SCHINZEL, Mirko, 70378 Stuttgart (DE)
(86) Internationale Anmeldenummer: PCT/EP2005/055421
(87) Internationale Veröffentlichungsnummer: WO 2006/061289

(56) Entgegenhaltungen:
- EP-A- 1 139 442
- DE-A1- 10 151 421
- DE-A1- 10 158 553
- DE-A1- 10 314 565

## Beschreibung

### Stand der Technik

Die Erfindung geht aus von einer elektrischen Schattung zur Ansteuerung eines piezoelektrischen Elements insbesondere einer Kraftstoffeinspritzanlage eines Kraftfahrzeugs gemäß dem Oberbegriff des Anspruchs 1. Die Erfindung betrifft ebenfalls ein entsprechendes Verfahren zur Ansteuerung eines piezoelektrischen Elements, sowie ein entsprechendes Computerprogramm, ein entsprechendes elektrisches Speichermedium und ein entsprechendes Steuergerät insbesondere für eine Kraftstoffeinspritzanlage eines Kraftfahrzeugs.

Eine elektrische Schaltung nach dem Oberbegriff des Anspruchs 1 ist aus der EP1139 422 A1 bekannt. Dort sind mehrere, aus einem piezoelektrischen Element und einem Transistor bestehende Serienschaltungen zueinander parallel geschaltet. In Serie zu der Parallelschaltung ist ein erster Messwiderstand nach Masse geschaltet. Andererseits ist die Parallelschaltung über eine Drosselspule mit dem gemeinsamen Anschlusspunkt zweier seriell nach Masse geschalteter Transistoren verbunden. Parallel zu den beiden Transistoren ist eine Serienschaltung aus einem Kondensator und einem zweiten Messwiderstand nach Masse geschaltet.

Bei der EP 1 139 442 A1 wird vor einem Aufladevorgang oder vor einem Entladevorgang, also bevor ein Strom über eines der piezoelektrischen Elemente fließt, geprüft, ob das piezoelektrische Element einen Kurzschluss aufweist. Hierzu wird während einer vorgegebenen Zeitdauer vor dem Auflade- oder Entlade vorgang geprüft, ob ein Strom über einen der Messwiderstände fließt. Ist dies der Fall, so liegt ein Fehler vor.

Für diese Überprüfung ist also eine bestimmte Zeitdauer erforderlich, die damit nicht für den Auflade- oder Entladevorgang verwendet werden kann. Dies hat zur Folge, dass beispielsweise kleine Einspritzmengen bei einer Kraftstoffeinspritzanlage eines Kraftfahrzeugs nur mit einer verminderten Genauigkeit von den piezoelektrischen Elementen zugemessen werden können.

Aus der DE 10 58 553 A1 bzw. aus der DE 103 14 565 A1 sind elektronische Schaltungen bekannt, die zur Ansteuerung eines piezoelektrischen Elements dienen. Zu den piezoelektrischen Elementen in Serie geschaltet sind erste Mittel zur Strommessung. Des weiteren sind zwei in Serie geschaltete Transistoren vorgesehen, deren gemeinsamer Anschlusspunkt mit dem piezoelektrischen Element gekoppelt ist. Des weiteren sind zweite Mittel zur Strommessung vorgesehen. Dabei sind die beiden Transistoren und die zweiten Mittel zur Strommessung in Serie geschaltet.

### Aufgabe und Vorteile der Erfindung

Aufgabe der Erfindung ist es, eine elektrische Schaltung zur Ansteuerung eines piezoelektrischen Elements zu schaffen, mit der eine Überprüfung auf mögliche Fehler in einfacher Weise möglich ist, ohne dass dadurch Nachteile beispielsweise im Hinblick auf Einspritzungen mit kleinen Einspritzmengen hingenommen werden müssen.

Diese Aufgabe wird bei einer elektrischen Schaltung der eingangs genannten Art erfindungsgemäß durch die Merkmale des kennzeichnenden Teils des Anspruchs 1 gelöst. Ebenfalls wird die Aufgabe durch das Verfahren nach dem Anspruch 6 gelöst.

Erfindungsgemäß sind die beiden Transistoren und der zweite Messwiderstand in Serie geschaltet. Im Unterschied zu der EP 1 139 442 A1 fließt der Strom damit während des gesamten Aufladens oder des gesamten Entladens eines der piezoelektrischen Elemente immer über den zweiten Messwiderstand. Damit ist es möglich, den über das entsprechende piezoelektrische Element fließenden Strom während des gesamten Aufladens oder des gesamten Entladens mit Hilfe der beiden Messwiderstände zu überwachen.

Die Funktionsfähigkeit der erfindungsgemäßen elektrischen Schaltung kann also während des Aufladens oder Entladens eines der piezoelektrischen Elemente durchgeführt werden. Eine Überprüfung der elektrischen Schaltung vor dem Auflade- oder Entladevorgang - wie dies bei der EP 1 139 442 A1 vorgenommen wird - ist somit nicht erforderlich. Die hierzu notwendige Zeitdauer entfällt. Die erfindungsgemäße Überprüfung der elektrischen Schaltung hat somit keinerlei negativen Einfluss beispielsweise auf die Einspritzung von kleinen Kraftstoffmengen bei einer Kraftstoffeinspritzanlage einer Brennkraftmaschine.

Bei einer vorteilhaften Weiterbildung der Erfindung ist ein Steuergerät vorgesehen, das mit den beiden Messwiderständen gekoppelt ist, und von dem die über die beiden Messwiderstände fließenden Ströme erfassbar sind. Durch die Serienschaltung der beiden Transistoren und des zweiten Messwiderstands können die Ströme während des gesamten Aufladens oder des gesamten Entladens des piezoelektrischen Elements von dem Steuergerät erfasst werden. Das Steuergerät muss damit keine Überprüfung vor dem eigentlich Auflade- oder Entladevorgang durchführen. Wie bereits erwähnt, entfällt die hierfür erforderlich Zeitdauer somit.

Besonders zweckmäßig ist es, wenn die beiden über die beiden Messwiderstände fließenden Ströme betragsmäßig etwa gleich groß sind, und wenn das Steuergerät einen Fehler erkennt, wenn dies nicht der Fall ist. Dies stellt eine sehr einfache, aber trotzdem zuverlässige Überprüfung der Funktionsfähigkeit der erfindungsgemäßen elektrischen Schaltung dar.

Bei einer vorteilhaften Ausgestaltung der Erfindung addiert das Steuergerät die beiden über die beiden Messwiderstände fließenden Ströme, und es wird von dem Steuergerät ein Fehler erkannt, wenn der sich ergebende Strom einen Toleranzbereich überschreitet.

### Ausführungsbeispiele der Erfindung

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
- Figur 1: zeigt ein schematisches Blockschaltbild einer elektrischen Schaltung zur Ansteuerung von piezoelektrischen Elementen insbesondere einer Kraftstoffeinspritzanlage eines Kraftfahrzeugs,
- Figuren 2a und 2b: zeigen die Schaltung der Figur 1 mit eingezeichneten Stromläufen, und
- Figuren 3a und 3b: zeigen schematische Zeitdiagramme von elektrischen Strömen in den Schaltungen der Figuren 2a und 2b.

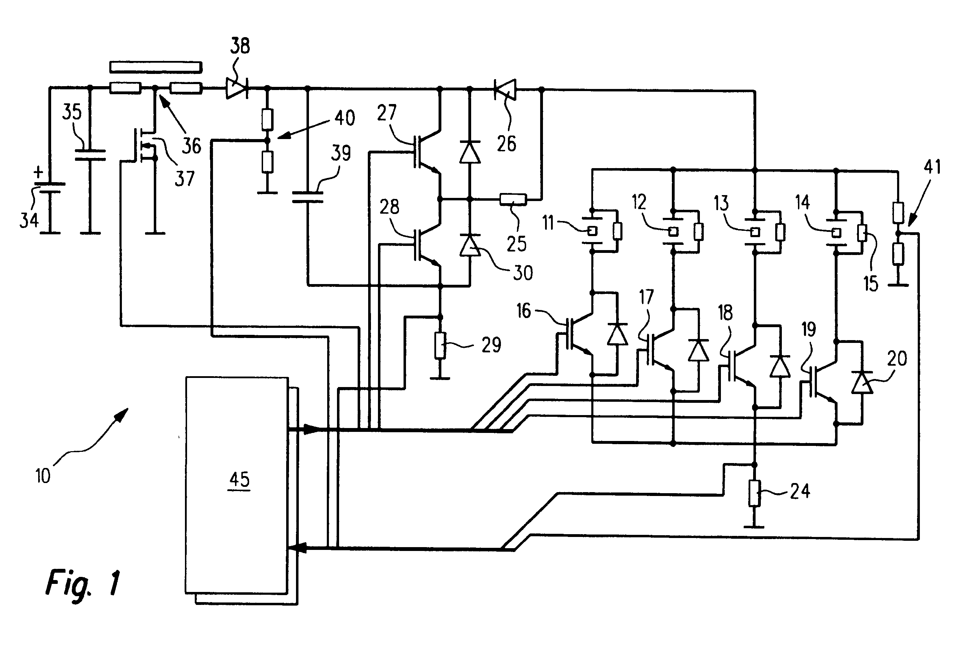

In der Figur 1 ist eine elektrische Schaltung 10 dargestellt, die vier piezoelektrische Elemente 11, 12, 13, 14 aufweist. Es versteht sich, dass auch eine andere Anzahl von piezoelektrischen Elementen vorgesehen sein kann. Die piezoelektrischen Elemente 11, 12, 13, 14 können insbesondere in einer Kraftstoffeinspritzanlage eines Kraftfahrzeugs zur Einspritzung von Kraftstoff verwendet werden.

Jedem der piezoelektrischen Elemente 11, 12, 13, 14 ist ein Widerstand 15 parallel geschaltet. Weiterhin ist zu jedem der piezoelektrischen Elemente 11, 12, 13, 14 ein Transistor 16, 17, 18, 19 in Serie geschaltet. Zu jedem der Transistoren 16, 17, 18, 19 ist eine Freilaufdiode 20 parallel geschaltet.

Die vier piezoelektrischen Elemente 11, 12, 13, 14 sind zueinander parallel geschaltet. Damit sind auch die vier zu den piezoelektrischen Elementen 11, 12, 13, 14 in Serie geschalteten Transistoren 16, 17, 18, 19 zueinander parallel geschaltet. Auf der Seite dieser Transistoren 16, 17, 18, 19 ist die Parallelschaltung mit einem ersten Messwiderstand 24 nach Masse geschaltet.

Der erste Messwiderstand 24 dient der Strommessung. Es versteht sich, dass anstelle des ersten Messwiderstands 24 auch andere Mittel zur Strommessung zur Anwendung kommen können.

Auf der anderen Seite, also auf der Seite der piezoelektrischen Elemente 11, 12, 13, 14, ist die Parallelschaltung mit einer Spule 25 und der Anode einer Sicherheitsfreilaufdiode 26 verbunden. Die Kathode der Sicherheitsfreilaufdiode 26 ist über die Serienschaltung zweier Transistoren 27, 28 und eines zweiten Messwiderstands 29 nach Masse geschaltet.

Der zweite Messwiderstand 29 dient der Strommessung. Es versteht sich, dass anstelle des zweiten Messwiderstands 29 auch andere Mittel zur Strommessung zur Anwendung kommen können.

Zu jedem der beiden Transistoren 27, 28 ist eine Freilaufdiode 30 parallel geschaltet. Der gemeinsame Anschlusspunkt der beiden Transistoren 27, 28 ist mit der Spule 25 verbunden.

Die bisher erläuterte Schaltung 10 wird von einer an Masse liegenden Batterie 34 mit Energie versorgt. Parallel zu der Batterie 34 ist ein Glättungskondensator 35 gegen Masse geschaltet. Der positive Anschluss der Batterie 34 ist mit einem Gleichspannungswandler 36 verbunden, der von einem gegen Masse geschalteten Transistor 37 gesteuert wird. Die der Batterie 34 abgewandte Seite des Gleichspannungswandlers 36 ist mit der Anode einer Diode 38 verbunden, deren Kathode mit der Kathode der Sicherheitsfreilaufdiode 26 zusammengeschaltet ist.

An diesen gemeinsamen Anschlusspunkt der beiden Dioden 26, 38 ist ein Kondensator 39 angeschlossen, der des weiteren mit dem zweiten Messwiderstand 29 verbunden ist. Weiterhin ist an diesen gemeinsamen Anschlusspunkt ein nach Masse geschalteter Spannungsteiler 40 angeschlossen. Ein weiterer Spannungsteiler 41 ist von der Anode der Sicherheitsfreilaufdiode 26 gegen Masse geschaltet.

Die den piezoelektrischen Elementen 11, 12, 13, 14 zugeordneten Transistoren 16, 17, 18, 19, die beiden Transistoren 27, 28, sowie der dem Gleichspannungswandler 36 zugeordnete Transistor 37 sind mit einem sogenannten ASIC 45 (ASIC = application specific integrated circuit) verbunden und werden von diesem gesteuert. Die beiden Messwiderstände 24, 29 sowie die beiden Spannungsteiler 40, 41 sind ebenfalls mit diesem ASIC 45 verbunden und liefern ihre Ströme bzw. Spannungen an denselben.

Die elektrische Schaltung 10 wird damit von dem ASIC 45 angesteuert. Der ASIC 45 wird seinerseits von einem nichtdargestellten Mikroprozessor angesteuert. Der ASIC 45 stellt damit die Schnittstelle zwischen der eine Endstufe bildenden Schaltung 10 und dem Mikroprozessor dar.

Die elektrische Schaltung 10, der ASIC 45 und der Mikroprozessor bilden zusammen ein Steuergerät. Die piezoelektrischen Elemente 11, 12, 13, 14 sind jedoch außerhalb des Steuergeräts und auch außerhalb der elektrischen Schaltung 10 bzw. des vorgenannten ASICs 45 angeordnet und über Anschlussleitungen, beispielsweise einen Kabelbaum, mit der elektrischen Schaltung 10 verbunden.

Das Steuergerät dient zur Steuerung und/oder Regelung der die piezoelektrischen Elemente 11, 12, 13, 14 beaufschlagenden Ströme. Hierzu weist das Steuergerät einen Computer in Form des bereits erwähnten Mikroprozessors mit einem elektrischen Speichermedium auf, insbesondere mit einem Flash-Memory. Auf dem Speichermedium ist ein Computerprogramm abgespeichert, das auf dem Computer ablauffähig ist. Dieses Computerprogramm ist dazu geeignet, die Ströme durch die piezoelektrischen Elemente 11, 12, 13, 14 zu beeinflussen und damit die erwünschte Steuerung und/oder Regelung durchzuführen.

Die Batterie 34 besitzt eine Gleichspannung von beispielsweise 12 Volt oder 24 Volt. Über den Gleichspannungswandler 36 wird diese Gleichspannung auf beispielsweise 240 Volt transformiert. Diese hochgesetzte Gleichspannung liegt an dem Spannungsteiler 40 an, so dass diese Spannung über den Spannungsteiler 40 von dem ASIC 45 ermittelt werden kann. Weiterhin lädt die hochgesetzte Gleichspannung den Kondensator 39 auf. Die an dem Kondensator 39 anliegende Spannung liegt auch an der Serienschaltung der beiden Transistoren 27, 28 an.

Von den beiden Transistoren 27, 28 wird immer nur einer von dem ASIC 45 angesteuert. Weiterhin werden die beiden Transistoren 27, 28, im angesteuerten Fall, getaktet leitend geschaltet. Wird der Transistor 27 leitend geschaltet, so kann eines der piezoelektrischen Elemente 11, 12, 13, 14 aufgeladen werden. Wird hingegen der Transistor 28 leitend geschaltet, so kann ein aufgeladenes piezoelektrisches Element 11, 12, 13, 14 entladen werden. Die an dem jeweiligen piezoelektrischen Element 11, 12, 13, 14 anliegende Spannung kann von dem ASIC 45 mit Hilfe des Spannungsteilers 41 ermittelt werden. Mit Hilfe der Spule 25 wird der Anstieg des beim Aufladen oder Entladen fließenden Stroms begrenzt. Mit Hilfe der Transistoren 16, 17, 18, 19 kann dasjenige piezoelektrische Element 11, 12, 13, 14 von dem ASIC 45 ausgewählt werden, das aufgeladen werden soll.

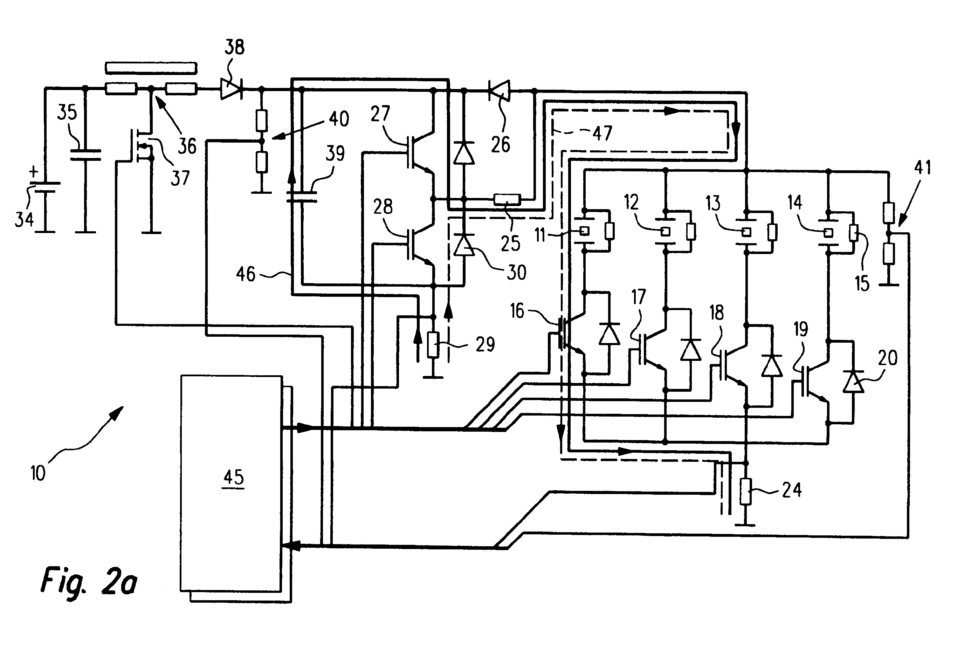

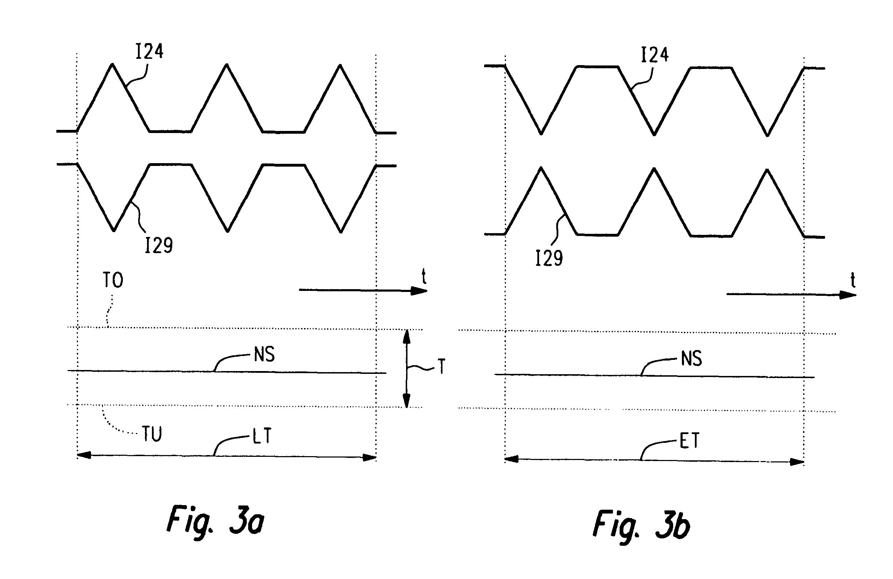

Das Aufladen eines der piezoelektrischen Elemente 11, 12, 13, 14 wird nachfolgend anhand der Figuren 2a, 3a erläutert.

Soll beispielsweise das piezoelektrische Element 11 aufgeladen werden, so werden die Transistoren 16, 27 von dem ASIC 45 zuerst leitend geschaltet. Es fließt ein Strom von dem Kondensator 39, über den leitend geschalteten Transistor 27, über die Spule 25, über das piezoelektrische Element 11, über den leitend geschalteten Transistor 16, über den ersten Messwiderstand 24, über Masse und über den zweiten Messwiderstand 29 zurück zu dem Kondensator 39. Dieser Stromlauf ist in der Figur 2a als durchgezogene Linie 46 eingezeichnet.

Danach wird der Transistor 27 gesperrt. Es fließt ein Strom von der Spule 25, über das piezoelektrische Element 11, über den leitend geschalteten Transistor 16, über den ersten Messwiderstand 24, über Masse, über den zweiten Messwiderstand 29 und über die untere der beiden Freilaufdioden 30 zurück zu der Spule 25. Dieser Stromlauf ist in der Figur 2a als gestrichelte Linie 47 eingezeichnet.

Danach wird der Transistor 27 wieder leitend geschaltet, so dass wieder ein Strom gemäß dem Stromlauf 46 fließt. Dieses Takten des Transistors 27 wird fortgesetzt, bis das piezoelektrische Element 11 auf eine erwünschte Spannung aufgeladen ist.

In der Figur 3a sind die über die beiden Messwiderstände 24, 29 fließenden Ströme über der Zeit t aufgetragen. Es handelt sich dabei um den im oberen Diagramm gezeigten Strom I24 über den Messwiderstand 24 und über den im unteren Diagramm gezeigten Strom I29 über den Messwiderstand 29. Weiterhin ist in der Figur 3a die Aufladezeitdauer LT eingetragen, während der der Transistor 27 getaktet wird, um das piezoelektrische Element 11 in der erwünschten Weise aufzuladen.

Aus den beiden Stromläufen 46, 47 der Figur 2a ergibt sich, dass der Strom über den Messwiderstand 24 immer auch über den Messwiderstand 29 fließt. Damit ist der Strom 124 immer betragsmäßig gleich dem Strom 129. Weiterhin ergibt sich aus den Stromläufen 46, 47 der Figur 2a, dass die beiden Ströme I24, I29 immer in gegensinniger Richtung und damit mit umgekehrtem Vorzeichen über die beiden Messwiderstände 24, 29 fließen. Daraus ergibt sich insgesamt der in den beiden Diagrammen der Figur 3a gezeigte Verlauf der beiden Ströme 124, 129.

Die ansteigende Flanke des Stroms 124 der Figur 3a entspricht dabei der Stromlauf 46 der Figur 2a, während die abfallende Flanke des Stroms 124 dem Stromlauf 47 entspricht. Umgekehrt entspricht die abfallende Flanke des Stroms 129 der Figur 3a dem Stromlauf 46 der Figur 2a und die ansteigende Flanke des Stroms 129 dem Stromlauf 47.

Wie erläutert wurde, sind die beiden Messwiderstände 24, 29 an das ASIC 45 angeschlossen. Die beiden über die Messwiderstände 24, 29 fließenden Ströme 124, 129 können daher von dem ASIC 45 erfasst werden. Daraufhin werden die beiden Ströme I24, I29 von dem ASIC 45 aufaddiert. Aufgrund der entgegengesetzten Vorzeichen und der betragsmäßigen Gleichheit der beiden Ströme 124, 129 ergibt diese Addition einen Strom NS. Dieser ist in der Figur 3a in dem dritten Diagramm eingezeichnet.

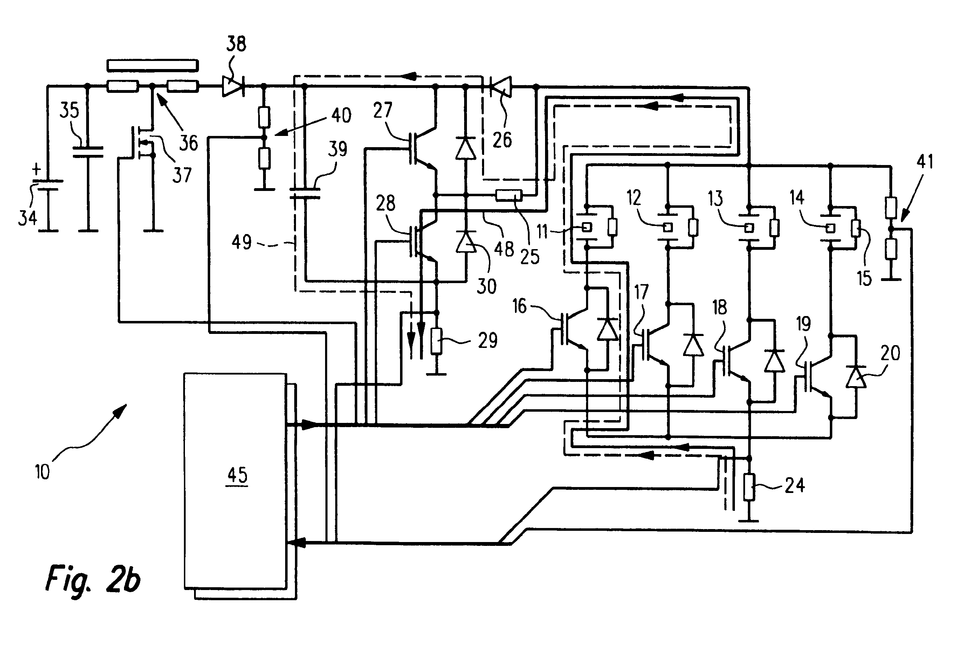

Das Entladen eines der piezoelektrischen Elemente 11, 12, 13, 14 entspricht grundsätzlich dem erläuterten Laden eines der piezoelektrischen Elemente 11, 12, 13, 14, wobei sich insbesondere die Stromrichtung ändert. Dieses Entladen wird nachfolgend anhand der Figuren 2b, 3b erläutert.

Soll beispielsweise das piezoelektrische Element 11 entladen werden, so wird der Transistor 28 und der Transistor 16 von dem ASIC 45 zuerst leitend geschaltet. Es fließt ein Strom mit einem Stromlauf, wie er in der Figur 2b als durchgezogene Linie 48 eingezeichnet ist. Danach wird der Transistor 28 gesperrt. Es fließt ein Strom mit einem Stromlauf, wie er in der Figur 2b als gestrichelte Linie 49 eingezeichnet ist. Danach wird der Transistor 28 wieder leitend geschaltet, so dass wieder ein Strom gemäß dem Stromlauf 48 fließt. Dieses Takten des Transistors 28 wird fortgesetzt, bis das piezoelektrische Element 11 in der erwünschten Weise entladen ist.

In der Figur 3b sind die über die beiden Messwiderstände 24, 29 fließenden Ströme über der Zeit t aufgetragen. Es handelt sich dabei um den im oberen Diagramm gezeigten Strom 124 über den Messwiderstand 24 und über den im unteren Diagramm gezeigten Strom 129 über den Messwiderstand 29. Weiterhin ist in der Figur 3b die Entladezeitdauer ET eingetragen, während der der Transistor 28 getaktet wird, um das piezoelektrische Element 11 in der erwünschten Weise zu entladen.

Aus den beiden Stromläufen 48, 49 der Figur 2b ergibt sich, dass der Strom über den Messwiderstand 24 immer auch über den Messwiderstand 29 fließt. Damit ist der Strom 124 immer betragsmäßig gleich dem Strom I29. Weiterhin ergibt sich aus den Stromläufen 48, 49 der Figur 2b, dass die beiden Ströme I24, I29 immer in gegensinniger Richtung und damit mit umgekehrtem Vorzeichen über die beiden Messwiderstände 24, 29 fließen. Daraus ergibt sich insgesamt der in den beiden Diagrammen der Figur 3b gezeigte Verlauf der beiden Ströme I24, I29.

Die abfallende Flanke des Stroms I24 der Figur 3b entspricht dabei der Stromlauf 48 der Figur 2b, während die ansteigende Flanke des Stroms 124 dem Stromlauf 49 entspricht. Umgekehrt entspricht die ansteigende Flanke des Stroms 129 der Figur 3b dem Stromlauf 48 der Figur 2b und die abfallende Flanke des Stroms 129 dem Stromlauf 49.

Wie erläutert wurde, sind die beiden Messwiderstände 24, 29 an das ASIC 45 angeschlossen. Die beiden über die Messwiderstände 24, 29 fließenden Ströme I24, I29 können daher von dem ASIC 45 erfasst werden. Daraufhin werden die beiden Ströme 124, 129 aufaddiert. Aufgrund der entgegengesetzten Vorzeichen und der betragsmäßigen Gleichheit der beiden Ströme 124, 129 ergibt diese Addition einen Strom NS. Dieser ist in der Figur 3b in dem dritten Diagramm eingezeichnet.

In beiden Fällen, also beim Aufladen, wie auch beim Entladen des piezoelektrischen Elements 11, wird der Strom NS von dem Steuergerät auf die Einhaltung vorgegebener Grenzen überwacht. So ist in den Figuren 3a, 3b eine obere Grenze TO und eine untere Grenze TU vorgegeben, die einen Toleranzbereich T definieren.

Das Steuergerät überwacht nun, ob sich der Strom NS innerhalb dieses Toleranzbereiches T befindet. Ist dies der Fall, so wird daraus auf eine zumindest insoweit korrekte Funktion der elektrischen Schaltung 10 geschlossen.

In den nachfolgend erläuterten Fehlerfällen überschreitet der Strom NS jedoch den Toleranzbereich T. Dies wird von dem Steuergerät erkannt und es wird daraus auf einen Fehler in der elektrischen Schaltung 10 geschlossen.

Entsteht an einem der piezoelektrischen Elemente 11, 12, 13, 14 ein Kurzschluss einer der beiden Anschlussleitungen des piezoelektrischen Elements zu dem positiven Anschluss der Batterie 34 und damit zu der von der Batterie 34 gelieferten Gleichspannung, so fließt - nachdem der zu dem kurzgeschlossenen piezoelektrischen Element zugehörige Transistor leitend geschaltet worden ist - ein Strom von dem kurzgeschlossenen piezoelektrischen Element über den leitend geschalteten, zugehörigen Transistor und über den ersten Messwiderstand 24 nach Masse. Über den zweiten Messwiderstand 29 fließt jedoch kein Strom. Die Addition der beiden Ströme I24, I29 liefert damit einen von Null wesentlich abweichenden Strom NS. Dies führt dazu, dass der Toleranzbereich T überschritten wird, und dass damit der Kurzschluss erkannt wird.

Entsteht an einem der piezoelektrischen Elemente 11, 12, 13, 14 ein Kurzschluss einer der beiden Anschlussleitungen des piezoelektrischen Elements nach Masse, so fließt beim Aufladen des piezoelektrischen Elements ein Strom über den zweiten Messwiderstand 29, über den Kondensator 39, über den leitend geschalteten Transistor 27 und über die Spule 25 zu dem auf Masse liegenden piezoelektrischen Element. Über den ersten Messwiderstand 24 fließt jedoch kein Strom. Die Addition der beiden Ströme 124, 129 liefert damit einen von Null wesentlich abweichenden Strom NS. Dies führt dazu, dass der Toleranzbereich T überschritten wird, und dass damit der Fehler erkannt wird.

Ist von dem Steuergerät entsprechend den vorstehenden Erläuterungen ein Fehler erkannt worden, so wird jegliche Ansteuerung der Transistoren 11, 12, 13, 14 und der Transistoren 27, 28 abgebrochen und die elektrische Schaltung 10 wird in einen betriebssicheren Zustand überführt.

Die erläuterte Fehlerüberwachung der elektrischen Schaltung 10 kann fortlaufend durchgeführt werden. Insbesondere wird das erläuterte Verfahren jedoch nur dann durchgeführt, wenn einer der Transistoren 16, 17, 18, 19 angesteuert wird.

## Patentansprüche

1. Elektrische Schaltung (10) zur Ansteuerung eines piezoelektrischen Elements (11, 12,13, 14) insbesondere einer Kraftstoffeinspritzanlage eines Kraftfahrzeugs, mit zu dem piezoelektrischen Element (11, 12, 13, 14) in Serie geschalteten ersten Mitteln zur Strommessung, insbesondere einem ersten Messwiderstand (24), mit zwei in Serie geschalteten Transistoren (27, 28), deren gemeinsamer Anschlusspunkt mit dem piezoelektrischen Element (11, 12, 13, 14) gekoppelt ist, sowie mit zweiten Mitteln zur Strommessung, insbesondere einem zweiten Messwiderstand (29), **dadurch gekennzeichnet, dass** die beiden Transistoren (27, 28) und die zweiten Mittel zur Strommessung in Serie geschaltet sind, wobei die beiden Transistoren (27, 28) zu einem Kondensator (39) parallel geschaltet sind, und dass der Kondensator (39) und die zweiten Mittel zur Strommessung eine Serienschaltung bilden.

2. Elektrische Schaltung (10) nach Anspruch 1, mit einem Steuergerät, das mit den beiden Mitteln zur Strommessung gekoppelt ist, und von dem die über die beiden Mittel zur Strommessung fließenden Ströme (124, 129) erfasst werden, **dadurch gekennzeichnet, dass** die Ströme (124,129) während des gesamten Aufladens oder des gesamten Entladens des piezoelektrischen Elements (11, 12, 13, 14) von dem Steuergerät erfasst werden.

3. Elektrische Schaltung (10) nach Anspruch 2, **dadurch gekennzeichnet**, die beiden über die beiden Mittel zur Strommessung fließenden Ströme (124, 129) betragsmäßig etwa gleich groß sind, und dass das Steuergerät einen Fehler erkennt, wenn dies nicht der Fall ist.

4. Elektrische Schaltung (10) nach Anspruch 3, **dadurch gekennzeichnet, dass** das Steuergerät die beiden über die beiden Mittel zur Strommessung fließenden Ströme (124, 129) addiert, und dass das Steuergerät einen Fehler erkennt, wenn der sich ergebende Strom (NS) einen Toleranzbereich (T) überschreitet.

5. Verfahren zur Ansteuerung eines piezoelektrischen Elements (11,12,13,14) insbesondere einer Kraftstoffeinspritzantage eines Kraftfahrzeugs, wobei erste Mittel zur Strommessung, insbesondere ein erster Messwiderstand (24), zu dem, piezoelektrischen Element (11,12,13,14) in Serie geschaltet sind, wobei der gemeinsame Anschlusspunkt von zwei in Serie geschalteten Transistoren (27, 28) mit dem piezo-elektrischen Element (11, 12,13,14) gekoppelt ist, und wobei zweite Mittel zur Strommessung, insbesondere ein zweiter Messwiderstand (29), vorhanden sind, **dadurch gekennzeichnet, dass** die beiden über die beiden Mittel zur Strommessung fließenden Ströme (124,129) miteinander verglichen werden, und dass ein Fehler erkannt wird, wenn die beiden Ströme (124, 129) betragsmäßig nicht etwa gleich groß sind.

6. Verfahren nach Anspruch 5, **dadurch gekennzeichnet, dass** die beiden Ströme (124, 129) addiert werden, und dass ein Fehler erkannt wird, wenn sich ein Strom (NS) ergibt, der einen Toleranzbereich (T) überschreitet.

7. Computerprogramm, **dadurch gekennzeichnet, dass** es alle Schritte eines Verfahrens nach einem der Ansprüche 5 oder 7 durchführt.

8. Elektrisches Speichermedium für ein Steuergerät, **dadurch gekennzeichnet, dass** auf ihm ein Computerprogramm abgespeichert ist, das alle Schritte eines Verfahrens nach einem der Ansprüche 5 oder 6 durchführt.

9. Steuergerät insbesondere für eine Kraftstoffeinspritzanlage eines Kraftfahrzeugs, **dadurch gekennzeichnet, dass** es Mittel zur Durchführung eines Verfahrens nach einem der Ansprüche 5 oder 6 umfasst.

## Claims

1. Electrical circuit (10) for controlling a piezoelectric element (11, 12, 13, 14), particularly of a fuel injection system of a motor vehicle, having first current-measuring means which are connected in series with the piezoelectric element (11, 12, 13, 14), particularly a first measuring resistor (24), having two transistors (27, 28) which are connected in series and whose common connection point is coupled to the piezoelectric element (11, 12, 13, 14), and having second current-measuring means, particularly a second measuring resistor (29), **characterized in that** the two transistors (27, 28) and the second current-measuring means are connected in series, the two transistors (27, 28) being connected in parallel with a capacitor (39), and **in that** the capacitor (39) and the second current-measuring means form a series circuit.

2. Electrical circuit (10) according to Claim 1, having a control unit which is coupled to the two current-measuring means and detects the currents (I24, I29) flowing via the two current-measuring means, **characterized in that** the currents (I24, I29) are detected by the control unit during the entire charging operation or the entire discharging operation of the piezoelectric element (11, 12, 13, 14).

3. Electrical circuit (10) according to Claim 2, **characterized in that** the magnitudes of the two currents (I24, I29) flowing via the two current-measuring means are approximately the same, and **in that** the control unit detects an error if this is not the case.

4. Electrical circuit (10) according to Claim 3, **characterized in that** the control unit adds the two currents (124, 129) flowing via the two current-measuring means, and **in that** the control unit detects an error if the resultant current (NS) exceeds a tolerance range (T).

5. Method for controlling a piezoelectric element (11, 12, 13, 14), particularly of a fuel injection system of a motor vehicle, first current-measuring means, particularly a first measuring resistor (24), being connected in series with the piezoelectric element (11, 12, 13, 14), the common connection point of two transistors (27, 28), which are connected in series, being coupled to the piezoelectric element (11, 12, 13, 14), and second current-measuring means, particularly a second measuring resistor (29), being provided, **characterized in that** the two currents (124, 129) flowing via the two current-measuring means are compared with one another, and **in that** an error is detected if the magnitudes of the two currents (124, 129) are not approximately the same.

6. Method according to Claim 5, **characterized in that** the two currents (124, 129) are added, and **in that** an error is detected if a current (NS) which exceeds a tolerance range (T) results.

7. Computer program, **characterized in that** it carries out all of the steps of a method according to either of Claims 5 and 6.

8. Electrical storage medium for a control unit, **characterized in that** it stores a computer program which carries out all of the steps of a method according to either of Claims 5 and 6.

9. Control unit, particularly for a fuel injection system of a motor vehicle, **characterized in that** it comprises means for carrying out a method according to either of Claims 5 and 6.

## Revendications

1. Circuit électrique (10) pour commander un élément piézo-électrique (11, 12, 13, 14) notamment une installation d'injection de carburant d'un véhicule automobile comportant
des premiers moyens branchés en série sur l'élément piézo-électrique (11, 12, 13, 14), pour mesurer le courant, notamment une première résistance de mesure (24),
deux transistors (27, 28) branchés en série et dont le point de liaison commun est couplé à l'élément piézo-électrique (11, 12, 13, 14), et
des seconds moyens pour mesurer un courant, notamment une seconde résistance de mesure (29),
**caractérisé en ce que**
les deux transistors (27, 28) et les seconds moyens pour mesurer un courant sont branchés en série,
les deux transistors (27, 28) sont branchés en parallèle par rapport à un condensateur (39), et
le condensateur (39) et les seconds moyens forment un montage en série pour mesurer un courant.

2. Circuit électrique (10) selon la revendication 1, comportant un appareil de commande couplé aux deux moyens de mesure du courant et qui saisit les courants (124, 129) passant par les deux moyens pour mesurer le courant,
**caractérisé en ce que**
les courants (124, 129) sont saisis pendant toute la charge ou toute la décharge de l'élément piézo-électrique (11, 12, 13, 14) par l'appareil de commande.

3. Circuit électrique (10) selon la revendication 2,
**caractérisé en ce que**
les deux courants (124, 129) passant par les deux moyens de mesure de courant sont d'amplitude sensiblement identiques et l'appareil de commande détecte un défaut si cela n'est pas le cas.

4. Circuit électrique (10) selon la revendication 3,
**caractérisé en ce que**
l'appareil de commande additionne les deux courants (124, 129) passant par les deux moyens de mesure de courant, et
l'appareil de commande détecte un défaut si le courant résultant (NS) dépasse une plage de tolérance (T).

5. Procédé de commande d'un élément piézo-électrique (11, 12, 13, 14) notamment d'un système d'injection de carburant d'un véhicule automobile, selon un premier moyen est branché en série pour mesurer le courant, notamment une première résistance de mesure (24) par rapport à l'élément piézo-électrique (11, 12, 13, 14),
le point de branchement commun de deux transistors (27, 28) branchés en série étant couplé à l'élément piézo-électrique (11, 12, 13, 14), et
des seconds moyens sont prévus pour mesurer l'intensité, notamment une seconde résistance de mesure (29),
**caractérisé en ce que**
les deux courants (124, 129) passant par les deux moyens pour mesurer le courant sont comparés entre eux et on décèle un défaut si les deux courants (124, 129) ne sont pas d'amplitude sensiblement identique.

6. Procédé selon la revendication 5,
**caractérisé en ce qu'**
on additionne les deux courants (124, 129), et
on décèle un défaut s'il résulte un courant (NS) dépassant une plage de tolérance (T).

7. Programme d'ordinateur
**caractérisé en ce qu'**
il exécute toutes les étapes d'un procédé selon l'une des revendications 5 ou 7.

8. Support d'enregistrement électrique pour un appareil de commande
**caractérisé en ce qu'**
il est enregistré dans un programme d'ordinateur exécutant toutes les étapes d'un procédé selon l'une des revendications 5 ou 6.

9. Appareil de commande notamment pour l'installation d'injection de carburant d'un véhicule automobile
**caractérisé en ce qu'**
il comporte des moyens pour mettre en oeuvre un procédé selon l'une des revendications 5 ou 6.
